# EUROPÄISCHE PATENTANMELDUNG

(11) **EP 1 972 804 A2**
(43) Veröffentlichungstag der Anmeldung: **24.09.2008**
(21) Anmeldenummer: 08004788.9
(22) Anmeldetag: 14.03.2008
(51) Int. Cl.: F16C 21/00

(54) **Axiallager mit einem radial inneren und einem radial äusseren Wälzlager**

(30) Priorität: 22.03.2007 DE 102007013826
(71) Anmelder: Rolls-Royce Deutschland Ltd & Co KG, 15827 Blankenfelde-Mahlow (DE)
(72) Erfinder: Venter, Gideon Daniel, 12205 Berlin (DE)
(74) Vertreter: Weber, Joachim

(57) **Zusammenfassung**

Die Erfindung bezieht sich auf ein Axiallager mit einem radial inneren 4 und einem radial äußeren 2 Wälzlager, wobei das radial innere Wälzlager 4 einen inneren Lagerring 5 und einen mittleren Lagerring 3 und das radial äußere Wälzlager 2 den mittleren Lagerring 3 und einen äußeren Lagerring 1 umfassen, und mit einem Zwangsantriebselement 6-10 für den mittleren Lagerring 3.

## Beschreibung

Die Erfindung bezieht sich auf ein Axiallager, insbesondere zur Verwendung als Drucklager für eine Gasturbine.

Um den Druck einer Welle in Axialrichtung aufnehmen zu können, insbesondere der Verdichterwelle oder der Turbinenwelle einer Gasturbine, sind Axiallager, die üblicherweise als Wälzlager ausgebildet sind, entsprechend zu dimensionieren. Dabei ist es aus dem Stand der Technik bekannt, bei einer Gasturbine aus Platzgründen und aus Gewichtsgründen ein einziges Axiallager vorzusehen, welches zusätzlich auch radiale Kräfte aufnehmen muss.

Wenn die Axialkraft, die sich vor allem aus dem Schub der Gasturbine ergibt, eine bestimmte Größe überschreitet, ist es nicht mehr möglich, diese Axialkraft über das Axiallager zu übertragen, da dieses seine Leistungsgrenze erreicht hat. Es ist deshalb erforderlich, aufwendige andere technische Lösungen zu suchen.

Bestehende Gasturbinen sind deshalb hinsichtlich ihrer Auslegung durch die maximal übertragbare Axiallast des Axialträgers begrenzt. Eine Steigerung des Schubs ist deshalb nur über andere konstruktive Maßnahmen möglich. So ist es beispielsweise denkbar, ein insgesamt größeres Lager einzubauen, welches bei höherem Gewicht auch einen größeren Durchmesser aufweist. Dies wiederum bedeutet, dass die Gesamtgestaltung des Verdichters und/oder weiterer Komponenten geändert werden muss. Hieraus ergibt sich ein größerer Durchmesser der Gasturbine, welcher vielfach nicht gewünscht ist. Weiterhin ergeben sich gesteigerte Kosten. Zusätzlich ist es bei einer Änderung der Lagerdimensionierung erforderlich, das gesamte Dichtungssystem zu ändern und anzupassen. Hieraus ergibt sich die Forderung nach mehr Dichtluft, welche wiederum zu einem negativen Einfluss auf den Wirkungsgrad der Gasturbine und den Brennstoffverbrauch führt.

Eine einfache Vergrößerung des Axiallagers ist auch aus anderen Gründen nicht oder nur sehr bedingt möglich:

Die derzeit bekannten Lagerstähle haben bereits die Grenzen der Materialfestigkeit erreicht. Weitere Steigerungen sind nicht oder nur mit hohem Aufwand möglich. Die Verwendung von Keramiklagern führt ebenfalls nicht zu der gewünschten Steigerung der Axialkraft, da insbesondere die gewünschten Drehzahlen die Abmessungen der Lagerelemente begrenzen. Auch die Zentrifugalkraft, welche insbesondere auf die Wälzelemente des Lagers einwirkt, begrenzt ebenfalls die Belastbarkeit eines Lagers.

Weiterhin ergeben sich Beschränkungen hinsichtlich der radialen Bemessungen der Axiallager durch die Gasturbinen-Architektur, insbesondere hinsichtlich der zentrischen Gasdurchleitungen. Je größer die Lagerkonstruktion werden muss, desto weiter vorne an der Gasturbine muss dieses montiert werden. Dies erfordert, dass die Hochdruck-Kompressorwelle verlängert werden muss. Hieraus wiederum ergibt sich ein negativer Effekt auf die Steifigkeit der Welle und die Strömungsverhältnisse.

Die Verwendung zweireihiger Axiallager bei Gasturbinen, insbesondere bei Fluggasturbinen, wird üblicherweise vermieden, da derartige Ausgestaltungen nicht erfolgreich waren und deshalb zweireihige Lager durch einreihige Lager ersetzt wurden. Bei zweireihigen Lagern ergibt sich insbesondere das Problem der ungleichmäßigen Lastverteilung. Dieses führt dazu, dass eine Lagerreihe oder ein Lager unbelastet ist und stärker verschleißt. Eine präzise Steuerung der Lastverteilung mehrreihiger Lager kann, im Gegensatz zum normalen Maschinenbau, bei Gasturbinen in der Praxis nicht gewährleistet werden.

Der Erfindung liegt die Aufgabe zugrunde, ein Axiallager der oben genannten Art zu schaffen, welches bei einfachem Aufbau und einfacher, kostengünstiger Herstellbarkeit die Nachteile des Stand der Technik vermeidet und eine große Axialkraft übertragen kann.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit ein Axiallager vorgesehen, welches ein radial inneres und ein radial äußeres Wälzlager umfasst, welche einen gemeinsamen mittleren Lagerring aufweisen. Das erfindungsgemäße Axiallager umfasst somit einen inneren Lagerring, einen mittleren Lagerring sowie einen radial äußeren Lagerring. Um sicherzustellen, dass die beiden Lager gleichmäßig belastet werden, ist ein Zwangsantriebselement für den mittleren Lagerring vorgesehen.

Erfindungsgemäß ergibt sich somit der Vorteil, dass die beiden Lager stets in vorgegebener Weise belastet werden, da der mittlere Lagerring zwangsweise angetrieben wird. Dies führt dazu, dass beide Lager ständig in vorgegebener Weise belastet sind. Durch die Möglichkeit, den Zwangsantrieb des mittleren Lagerrings entsprechend auszugestalten, ergibt sich eine konstruktive Möglichkeit der Lastaufteilung zwischen den beiden Lagern.

Erfindungsgemäß kann somit ein Doppellager oder ein zweireihiges Lager in einer üblichen Einbausituation einer Lageranordnung verwendet werden. Weitere konstruktive Maßnahmen, insbesondere eine Durchmesservergrößerung oder Ähnliches, sind nicht erforderlich.

Dabei ist es insbesondere vorteilhaft, dass die beiden Lager im Wesentlichen konzentrisch zueinander angeordnet sind. Sie können entweder exakt konzentrisch oder leicht in Axialrichtung gestuft vorgesehen sein.

Im Gegensatz zu üblichen zweireihigen Lagern, bei welchen beide Lager einen gemeinsamen Innenring und einen gemeinsamen Außenring verwenden, sind erfindungsgemäß somit drei Lagerringe vorgesehen.

Wenn somit die Welle zusammen mit dem inneren Lagerring in Drehung versetzt wird, dreht sich der mittlere Lagerring durch den Zwangsantrieb ebenfalls mit, jedoch in einer unterschiedlichen Drehgeschwindigkeit. Der äußere Lagerring bleibt üblicherweise stationär. Würde auf einen Zwangsantrieb verzichtet werden, so würde dies dazu führen, dass nur eines der beiden Lager in Drehung versetzt wird, während das andere Lager steht. Hierdurch würde sich eine ungleichmäßige Belastung ergeben, die wiederum zu einer unterschiedlichen Lebensdauer der beiden Lager führt. Daraus würde sich die Gefahr ergeben, dass eines der Lager früher verschleißt und versagt.

Demgegenüber ist erfindungsgemäß vorgesehen, die Bewegung des mittleren Lagerrings entsprechend zu steuern. Dies führt dazu, dass durch den Zwangsantrieb ein Abrollen beider Lager erfolgt.

Erfindungsgemäß ergibt sich somit der Vorteil, dass die effektive Geschwindigkeit des Lagers reduziert wird. Hierdurch ergibt sich eine Reduzierung der Anzahl der Lastzyklen für die gesamte Lebensdauer des Lagers, verglichen mit einem Axiallager nach dem Stand der Technik. Da eine Beziehung zwischen der Lebensdauer des Lagers und der Belastbarkeit besteht, kann durch eine Reduktion der Betriebszyklen eine Steigerung der Lagerlast erfolgen.

Die Reduzierung der Drehzahl führt auch zu einer Reduzierung der Zentrifugalbelastung auf die drehenden Elemente, insbesondere die Wälzkörper. Dies wiederum erlaubt die Verwendung größerer, eine höhere Last tragender Teile, wodurch sich die Belastbarkeit des Lagers weiter steigern lässt.

Durch die erfindungsgemäß vorgesehene Aufteilung der Lagerbelastung wird das Risiko einer ungleichen Lagerbelastung oder eines ungleichen Verschleißes ausgeschlossen. Hierdurch ergeben sich für beide Lager gleiche Lebenserwartungen.

Es versteht sich, dass die erfindungsgemäße Lagerkonstruktion nicht auf die Verwendung bei Gasturbinen beschränkt ist. Vielmehr kann das Axiallager auch für andere Einsatzzwecke, bei denen hohe Drehzahlen auftreten und eine hohe Axialkraft zu übertragen ist, verwendet werden.

Erfindungsgemäß ist es besonders günstig, wenn das Zwangsantriebselement ein Planetengetriebe umfasst. Dieses ist platzsparend einbaubar und zeichnet sich durch eine hohe Zuverlässigkeit aus. In Abhängigkeit von der Ausgestaltung des Planetengetriebes ist es möglich, den mittleren Lagerring entweder in gleicher Richtung wie die Welle oder in entgegengesetzter Richtung zu drehen. Letzteres kann zu einer Reduzierung der Zentrifugalkräfte beitragen. Es versteht sich, dass auch andere Lösungen für das Zwangsantriebselement möglich sind, beispielsweise hydraulische oder pneumatische Lösungen.

Im Folgenden wird die Erfindung anhand eines Ausführungsbeispiels in Verbindung mit der Zeichnung beschrieben. Dabei zeigt:

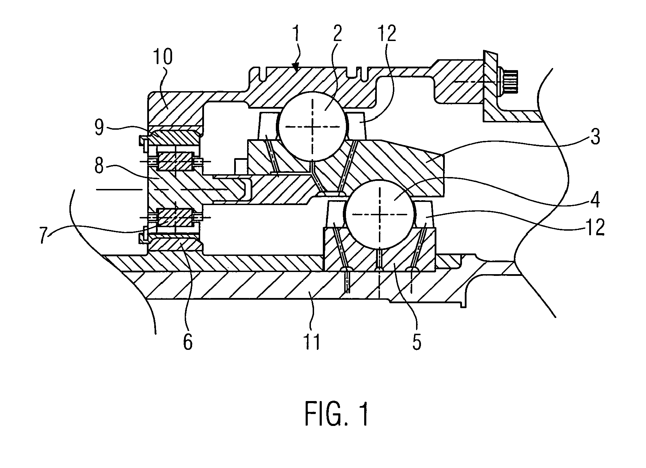

- Fig. 1: eine Schnittansicht durch ein erfindungsgemäßes Axiallager.

Das erfindungsgemäße Axiallager umfasst einen äußeren Lagerring 1, welcher nicht-rotierend mit einem im Einzelnen nicht gezeigten Lagergehäuse verbunden oder mit diesem kombiniert ist. Erfindungsgemäß ist ein radial äußeres Wälzlager 2 vorgesehen, welches sich gegen einen mittleren Lagerring 3 abstützt. Dieser ist wiederum Teil eines radial inneren Wälzlagers 4, welches einen inneren Lagerring 5 umfasst, der drehfest mit einer Welle 11 verbunden ist.

Die Fig. 1 zeigt die Ausgestaltung des erfindungsgemäßen Lagers als Kugellager, es ist auch möglich, andere Formen von Wälzkörpern zu verwenden. Mit dem Bezugszeichen 12 sind übliche Käfige dargestellt.

Wie die Fig. 1 zeigt, können die beiden Wälzlager 2 und 4 in axialer Richtung gestuft oder versetzt angeordnet sein, es ist jedoch auch möglich, diese exakt konzentrisch anzuordnen.

Der mittlere Lagerring 3 ist erfindungsgemäß mit einem Planetenradträger 8 gekoppelt, wobei die Kopplung so erfolgen kann, dass ein axialer Längenausgleich möglich ist.

Der Planetenradträger 8 lagert über Planetenradlager 7 mehrere Planetenräder 9. Abhängig von der Dimensionierung des erfindungsgemäßen Axiallagers kann eine geeignete Anzahl an Planetenrädern 9 vorgesehen sein.

Die Planetenräder 9 kämmen mit einem Ringrad 10, welches stationär an dem äußeren Lagerring 1 angeordnet oder mit diesem befestigt ist, sowie mit einem Sonnenrad 6, welches drehfest mit der Welle 11 verbunden ist. Bei einer Drehung der Welle zusammen mit dem Sonnenrad 6 relativ zu dem Ringrad 10 erfolgt somit eine Abrollbewegung der Planetenräder 9, so wie dies bei Planetengetrieben üblich ist.

Es versteht sich, dass auch andere Dimensionierungen und/oder konstruktive Ausgestaltungen der Erfindung möglich sind, um insbesondere den mittleren Lagerring in eine Zwangsbewegung (Zwangsdrehung) zu versetzen, wenn sich die Welle relativ zu dem Gehäuse dreht.

### Bezugszeichenliste

- 1: Äußerer Lagerring
- 2: Radial äußeres Wälzlager
- 3: Mittlerer Lagerring
- 4: Radial inneres Wälzlager
- 5: Innerer Lagerring
- 6: Sonnenrad
- 7: Planetenradlager
- 8: Planetenradträger
- 9: Planetenrad
- 10: Ringrad
- 11: Welle
- 12: Käfig

## Patentansprüche

1. Axiallager mit einem radial inneren (4) und einem radial äußeren (2) Wälzlager, wobei das radial innere Wälzlager (4) einen inneren Lagerring (5) und einen mittleren Lagerring (3) und das radial äußere Wälzlager (2) den mittleren Lagerring (3) und einen äußeren Lagerring (1) umfassen, und mit einem Zwangsantriebselement (6-10) für den mittleren Lagerring (3).

2. Axiallager nach Anspruch 1, **dadurch gekennzeichnet, dass** das Zwangsantriebselement (6-10) mechanisch wirkend ausgebildet ist.

3. Axiallager nach Anspruch 2, **dadurch gekennzeichnet, dass** das Zwangsantriebselement (6-10) als Planetengetriebe ausgebildet ist.

4. Axiallager nach Anspruch 3, **dadurch gekennzeichnet, dass** das Zwangsantriebselement (6-10) zwischen dem äußeren Lagerring (1), dem mittleren Lagerring (3) und dem inneren Lagerring (5) wirkend angeordnet ist.

5. Axiallager nach einem der Ansprüche 1 bis 4, **dadurch gekennzeichnet, dass** das radial äußere Wälzlager (2) und das radial innere Wälzlager (4) gleich ausgebildet ist.

6. Axiallager nach einem der Ansprüche 1 bis 4, **dadurch gekennzeichnet, dass** das radial äußere Wälzlager (2) und das radial innere Wälzlager (4) unterschiedlich dimensioniert sind.

7. Axiallager nach einem der Ansprüche 1 bis 6, **dadurch gekennzeichnet, dass** das radial äußere Wälzlager (2) und das radial innere Wälzlager (4) konzentrisch zueinander angeordnet sind.

8. Axiallager nach einem der Ansprüche 1 bis 6, **dadurch gekennzeichnet, dass** das radial äußere Wälzlager (2) und das radial innere Wälzlager (4) in Axialrichtung versetzt zueinander angeordnet sind.

9. Axiallager nach einem der Ansprüche 3 bis 8, **dadurch gekennzeichnet, dass** das Planetengetriebe ein Sonnenrad (6) umfasst, welches mit dem inneren Lagerring (5) drehfest verbunden ist, sowie einen Planetenträger (8), der mit dem mittleren Lagerring (3) drehfest verbunden ist und Planetenräder (9), die mit dem Sonnenrad (6) und einem Ringrad (10), welches mit dem äußeren Lagerring (1) drehfest verbunden ist, in Eingriff sind.

10. Axiallager nach einem der Ansprüche 1 bis 9, **dadurch gekennzeichnet, dass** der radial äußere Lagerring (1), der radial mittlere Lagerring (3) und der radial innere Lagerring (5) in gleicher Drehrichtung bewegbar sind.

11. Axiallager nach einem der Ansprüche 1 bis 9, **dadurch gekennzeichnet, dass** der radial äußere Lagerring (1) und der radial innere Lagerring (5) in gleicher Drehrichtung und der radial mittlere Lagerring (3) in entgegengesetzter Drehrichtung bewegbar sind.

12. Axiallager nach einem der Ansprüche 1 bis 11, **dadurch gekennzeichnet, dass** das radial äußere Wälzlager (2) und das radial innere Wälzlager (4) mit im Wesentlichen gleicher Axialkraft beaufschlagbar sind.

13. Verwendung eines Axiallagers nach einem der Ansprüche 1 bis 12 als Drucklager für eine Gasturbine.
